Europäisches Patentamt

European Patent Office

Office européen des brevets

(11) Publication number: 0 401 498
A2

# EUROPEAN PATENT APPLICATION

(21) Application number: 90107239.7

(22) Date of filing: 17.04.90

(51) Int. Cl.5: B29C 45/00, A63B 49/10,
//B29K105:12,B29L31:52

(30) Priority: 27.05.89 GB 8912280
10.06.89 GB 8913414

(43) Date of publication of application:
12.12.90 Bulletin 90/50

(84) Designated Contracting States:
AT BE DE ES FR IT NL

(71) Applicant: DUNLOP LIMITED
Silvertown House Vincent Square
London SW1P 2PL(GB)

(72) Inventor: Haines, Robert Christopher
10 Woodsome Park, Fenay Bridge
Huddersfield, West Yorkshire(GB)
Inventor: Curtis, Michael Edward
9 Holmfield Lane
Wakefield, West Yorkshire(GB)

(74) Representative: Hinton, Alan Horace et al
BTR Group Patent & Trade Mark Service P O
Box 504
Erdington Birmingham B24 9QH(GB)

(54) Hollow, elongate mouldings.

(57) The invention provides hollow, elongate moul-
dings of a fibre-reinforced thermoplastics material.
The mouldings are made by a gas-assisted injection
moulding process in a mould of which the moulding
cavity consists of a single, continuous pathway and
the ratio of the overall length of the moulded product
to its mean wall thickness is greater than 250 : 1.
The mould cavity may include limited discontinuities
such as are required to form a pair of throat mem-
bers (T, T¹) on a racket frame (S).

EP 0 401 498 A2

## Fig.8.

# HOLLOW ELONGATE MOULDINGS

This invention relates to hollow, elongate mouldings which have been made by the gas-assisted injection moulding of a fibre-reinforced thermoplastics material. The present invention also relates to a frame for a games racket made by a gas-assisted injection moulding process.

Gas-assisted injection moulding is known per se for the production of complex moulded articles in which the thicker sections can be cored-out in order to avoid material sinkage and to reduce weight.

Previous attempts to produce hollow racket frame mouldings by the gas-assisted injection moulding process have used conventionally designed injection moulds to produce the required shape, size and form of a racket frame.

Such mouldings have been found to have gross variations in wall thickness and erratic internal void geometry. The variations in wall thickness and internal void geometry can lead to premature breakage of the frame under the stresses induced in play, particularly for mis-hits off the frame. Also, due to inefficient coring of the moulding by the gas, the moulded frames are excessively heavy.

For a racket frame to be satisfactory for tournament play it must be as light as possible, and for it to be sufficiently strong at this light weight it is vital that the hollow structure of the frame be of as uniform wall thickness as possible in relation to its overall length.

We have found that a racket frame made by gas-assisted injection moulding can meet these criteria if the main structure of the frame is designed as a continuous tubular member and the plastics/gas injection is made at a point on the mould corresponding to one end of the tubular member, so that the flow of plastics material and coring gas is confined to a continuous path around the mould cavity until it reaches the other end. The important feature is that the plastics/gas flow is confined to a single continuous path from one extremity of the mould cavity to the other, and that at no stage can flow occur in other than this one continuous path - for instance, no allowance is made to mould-in a hollow bridge piece (needed to 'close' the racket head), as this would disrupt the moulding process and lead to inaccurate coring, owing to the fact that the main mould flow path would be 'short-circuited' at the bridge position.

We have also found that, in accordance with the present invention, it is possible to make, by a gas-assisted injection-moulding process, a racket frame including a bridge portion.

This is achieved by designing the mould cavity so that the part corresponding to the bridge portion of the moulding is discontinuous, whereby the moulded product includes, as a bridge portion, a pair of discontinuous members which are integral with the hollow frame at their outermost ends but define a gap between their innermost ends.

Accordingly, the present invention provides a hollow elongate moulding of a fibre-reinforced thermoplastics material, the moulding being made by means of a gas-assisted injection moulding process in a mould wherein the moulding cavity consists of a single, continuous pathway and the ratio of the overall length of the moulding to its mean wall thickness is greater than 250 : 1.

The present invention also provides a moulding which is a one piece, hollow frame for a games racket, the frame being made from a fibre-reinforced thermo-plastics material by means of a gas-assisted injection moulding process in a mould wherein the moulding cavity consists of a continuous tubular pathway, the moulding material is injected at one end of the pathway and flows to the other end of the pathway and the ratio of the overall length of the moulded hollow frame to its mean wall thickness is greater than 250 : 1.

In one preferred embodiment of the present invention, the moulding cavity may consist of a continuous, generally hairpin-shaped loop. The moulded product obtained from such a cavity may, for example, be used to make a twin-shafted tennis racket.

Alternatively, the twin shafts may subsequently be located together to give the appearance of a "single" shaft (as, for example, in the case of a squash racket).

In another preferred embodiment of the present invention, the moulding cavity may consist of an open, generally circular or generally oval loop. The moulded product obtained from such a cavity may, for example, be used to make the head only of a badminton racket, the shaft and handle being made separately and subsequently assembled with the head to form a badminton racket frame.

Preferably, the length-to-wall-thickness ratio of a moulding in accordance with the present invention is in the range 250 : 1 to 1250 : 1. Most suitably, the ratio is about 750 ± 250:1, (i.e. 500:1 to 1000:1) and represents, for a tennis racket or squash racket frame of the type hereinbefore described with a length of about 150 cm, a mean wall thickness in the range 1.5 mm to 3 mm.

It will be appreciated that a tennis racket or squash racket frame according to the present invention requires a "bridge" or "throat" portion so as to close the head portion. This may be achieved by the partial moulding-in of lugs and the subsequent attachment of a "bridge".

Accordingly, the present invention further provides a hollow elongate moulding which is a frame for a games racket, the frame consisting of a generally hairpin-shaped hollow continuous outer portion and a bridge portion, said bridge portion comprising a pair of discontinuous, inwardly-extending throat members, the throat members being integral with the hollow portion at their outermost ends but defining a gap between their innermost ends.

The present invention yet further provides a games racket frame as described in the immediately-preceding paragraph, the frame including bridging means adapted to join said throat members across said gap.

In one preferred embodiment of the present invention, the bridging means comprises a pair of complementary interlocking members, one of each said interlocking members being formed on one of said throat members.

For example, the pair of complementary interlocking members may be so shaped as to provide a "jigsaw-puzzle" type of interlock.

In a further preferred embodiment of the present invention, the bridging means comprises a discrete bridging member which may be removably attachable or permanently attached between said throat members.

For example :

(a) A solid bridging member may be provided with spigots which are received in corresponding bores provided in solid throat members;

(b) A solid bridging member may be provided with borers to receive corresponding spigots extending from solid throat members;

(c) A tubular bridging member may receive corresponding spigots provided on solid throat members, whereby the peripheral outer surface of the bridging member is flush with that of the throat members;

(d) A solid bridging member may be received in corresponding bores provided in solid throat members, whereby the peripheral outer surface of the bridging member is flush with that of the throat members;

(e) A solid spherical bridging member may be received in corresponding hemispherical bores in solid throat members.

The bridging member may be made from the same material as that of the racket frame or it may be made of a different material to give desirable properties to the frame. For instance, it could be made of a flexible and/or elastic material which would allow the throat portion of the frame to flex on impact of the ball with the strings.

As stated hereinbefore, the bridging member may be removable from the throat of the racket.

Alternatively, the bridging member may be permanently fixed in position by welding or by means of a suitable adhesive.

It will be appreciated that the throat members can be 'sprung' apart to facilitate fitment of the bridging member.

To finish the racket frame, appropriate stringing holes must be produced by drilling, cutting with a hot tool, or, for example, by means of a laser beam. The edges of the holes must be appropriately rounded so that the strings are not cut and separate moulded 'grommets' or a 'grommet strip' may be incorporated for this purpose.

The racket frame will be provided with a handle, which may be of moulded plastic foam (e.g. polyurethane foam) or by the incorporation and fixing of moulded shells to form a handle. Such methods are well known to those in the art to which this invention relates.

The present invention will be illustrated, merely by way of example, in the following description and with reference to the accompanying drawings. In the drawings :

Figures 1 to 8 illustrate a moulding according to the present invention which is a games racket frame including integral throat members;

Figures 9 and 10 illustrate a moulding according to the present invention which is a games racket frame comprising a single continuous hollow moulding.

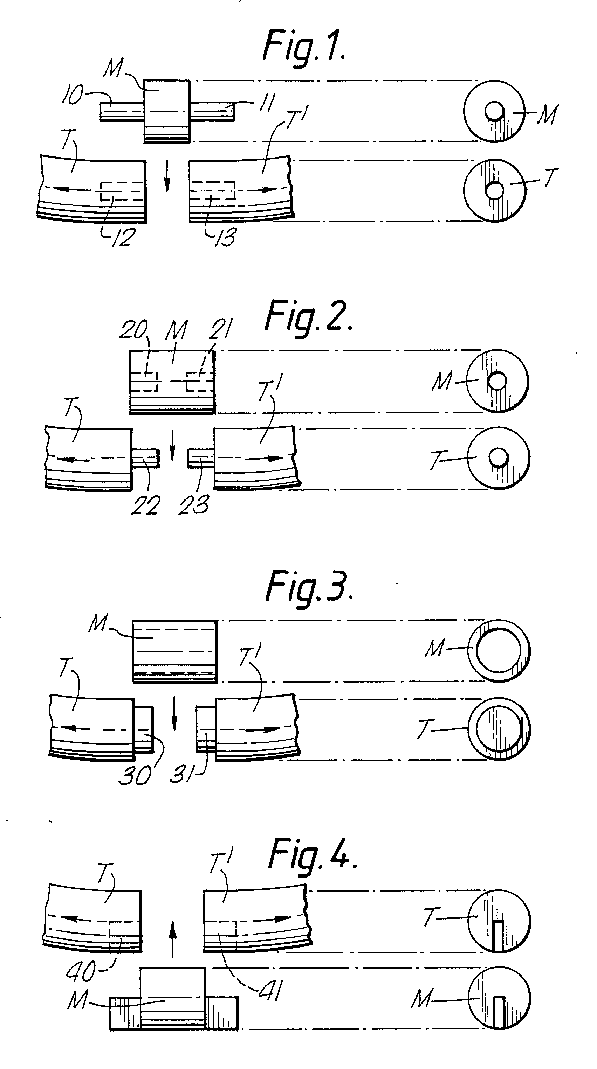

Referring to Figures 1 to 8 :

Figure 1 shows a solid bridging member M provided with spigots 10 and 11 which are received in corresponding bores 12 and 13 provided in the throat members T and T¹ respectively.

Figure 2 shows a solid bridging member M provided with bores 20 and 21 which receive corresponding spigots 22 and 23 provided on the throat members T and T¹ respectively.

Figure 3 shows a tubular bridging member M which receives corresponding spigots 30 and 31 provided on the throat members T and T¹ respectively.

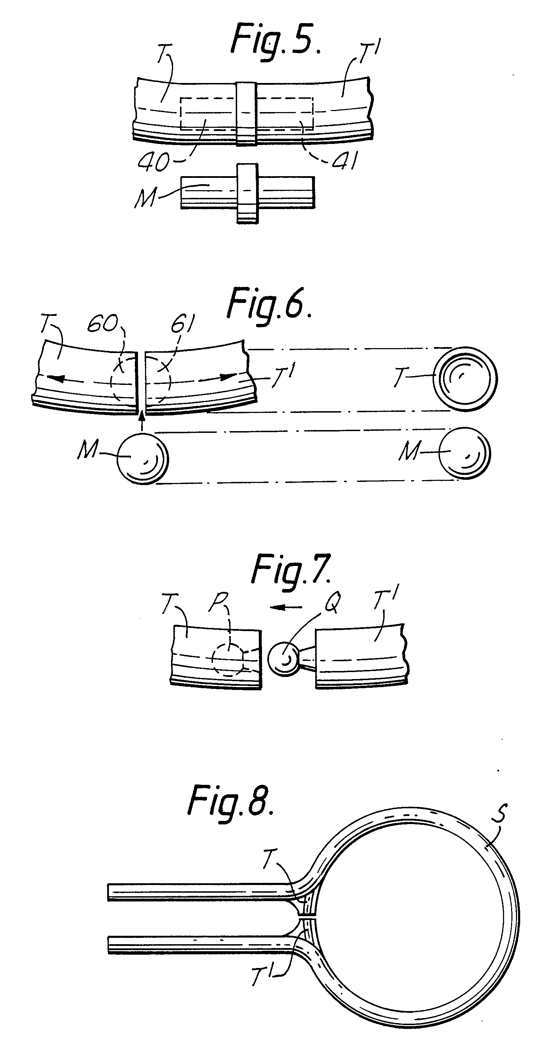

Figures 4 and 5 each show a solid bridging member M which is received in corresponding bores 40 and 41 provided in the throat members T and T¹ respectively.

Figure 6 shows a solid spherical bridging member M which is received in corresponding hemispherical bores 60 and 61 provided in the throat members T and T¹ respectively.

Figure 7 shows complementary interlocking members P and Q, provided respectively on the throat members T and T¹.

Figure 8 shows a moulded frame according to the present invention and comprising a generally hairpin shaped hollow portion S with solid throat members T and T¹.

Other methods, within the scope of the present invention, of incorporating a hollow or solid bridging member in the racket throat, will be readily apparent to those skilled in the art.

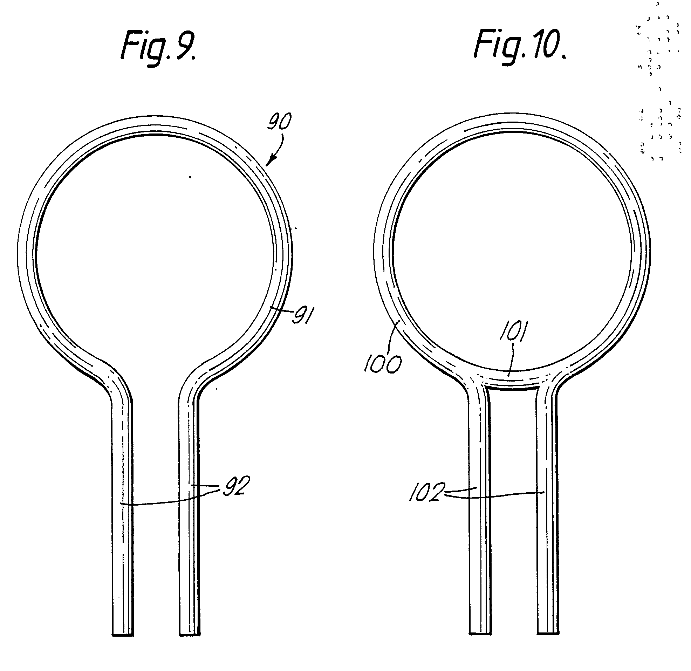

Referring now to Figures 9 and 10 of the drawings:

Figure 9 is a schematic view of a racket frame according to the present invention;

Figure 10 is a schematic view of the frame of Figure 9, the frame including a "bridge".

The racket frame, indicated generally at 90, comprises a hollow, one-piece moulding of fibre-reinforced thermoplastics material. It is generally hairpin-shaped and comprises a head portion 91 and twin shaft portions 92.

As shown in Figure 10, the head portion 100 is closed by means of bridge portion 101. The closed head 100 is then strung and the shaft portions 102 incorporated into a handle, as is well known to those skilled in the art.

Whilst the present invention has been described herein with particular reference to a hollow, moulded games racket frame, it is to be understood that other elongate mouldings (for example golf club shafts, billiards cues, fishing rods and the like) are included within its scope.

**Claims**

1. A hollow elongate moulding of a fibre-reinforced thermoplastics material, the moulding being made by means of a gas-assisted injection-moulding process in a mould, characterized in that the moulding cavity of the mould consists of a single, continuous pathway and in that the ratio of the overall length of the moulding to its mean wall thickness is greater than or equal to 250 : 1.

2. A moulding according to Claim 1 which is a one-piece hollow frame for a games racket, the frame being made from a fibre-reinforced thermoplastics material by means of a gas-assisted injection-moulding process in a mould, characterized in that the moulding cavity of the mould consists of a continuous tubular pathway, the moulding material is injected at one end of the pathway and flows to the other end of the pathway and in that the ratio of the overall length of the moulded hollow frame to its mean wall thickness is greater than or equal to 250 : 1.

3. A moulding according to Claim 1 or 2, characterized in that the moulding consists of a continuous, generally hairpin-shaped loop (S).

4. A moulding according to Claim 1 or 2, characterized in that the moulding consists of an open, generally circular or generally oval loop.

5. A moulding according to any one of Claims 1 to 4, characterized in that the ratio of the overall length of the moulding to its mean wall thickness is in the range 250 : 1 to 1250 : 1 (preferably in the range 500 : 1 to 1000 : 1).

6. A moulding according to any one of Claims 1 to 5, which is a frame for a games racket characterized in that the frame consists of a generally hairpin-shaped hollow continuous outer portion (S) and a bridge portion, said bridge portion comprising a pair of discontinuous inwardly-extending throat members (T; T') the throat members being integral with the outer portion (S) at their outermost ends but defining a gap between their innermost ends.

7. A moulding according to Claim 6, characterized by bridging means adapted to join said throat members (T; T') across said gap.

8. A moulding according to Claim 7, characterized in that the bridging means comprises a pair of complementary interlocking members (P; Q), one of each said interlocking members being formed on one of said throat members (T; T').

9. A moulding according to Claim 7, characterized in that bridging means comprises a discrete bridging member (M).

10. A moulding according to Claim 9, characterized in that the discrete bridging member (M), is removably attachable between the throat members (T; T').

11. A moulding according to Claim 9, characterized in that discrete bridging member (M) is permanently attached between the throat members (T; T').

12. A moulding according to Claim 9, 10 or 11, characterized in that the bridging member (M) is made of the same material as that of the outer frame portion (S).

13. A moulding according to Claim 9, 10 or 11, characterized in that the bridging member (M) is made of a different material from that of the outer frame portion (S).

14. A moulding according to any one of Claims 1 to 13, characterized in that said moulding constitutes a tennis racket frame, a badminton racket frame or a squash racket frame.

15. A moulding according to Claim 1 or 5 (characterized in that said moulding constitutes a golf club shaft, a billiards cue or a fishing rod.

# Fig.1.

# Fig.2.

# Fig.3.

# Fig.4.

# Fig.5.

$T$  $T^1$

40  41

$M$

# Fig.6.

$T$  60  61

$T^1$  $T$

$M$  $M$

# Fig.7.

$T$  $P$  $Q$  $T^1$

# Fig.8.

$T$  $S$

$T^1$

Fig.9.

Fig.10.